# EUROPÄISCHE PATENTSCHRIFT

(11) **EP 2 339 150 B1**
(45) Veröffentlichungstag und Bekanntmachung des Hinweises auf die Patenterteilung: **08.10.2014**
(21) Anmeldenummer: 10194453.6
(22) Anmeldetag: 10.12.2010
(51) Int. Cl.: F02D 13/06, F02B 29/08, F02D 17/02

(54) **Brennkraftmaschine und zugehöriges Betriebsverfahren**
Combustion engine and corresponding operating method
Moteur à combustion interne et procédé de fonctionnement correspondant

(30) Priorität: 23.12.2009 DE 102009060211
(43) Veröffentlichungstag der Anmeldung: 29.06.2011
(73) Patentinhaber: MAHLE International GmbH, 70376 Stuttgart (DE)
(72) Erfinder: Elsässer, Alfred, 75210, Keltern (DE); Hoffmann, Hermann, 70599, Stuttgart (DE); Lüddecke, Bernhardt, 67259, Großniedesheim (DE)
(74) Vertreter: BRP Renaud & Partner

(56) Entgegenhaltungen:
- DE-A1-102007 042 053
- DE-T2- 69 600 937
- US-A1- 2005 022 755

## Beschreibung

Die vorliegende Erfindung betrifft eine Brennkraftmaschine, insbesondere für ein Kraftfahrzeug. Die Erfindung betrifft außerdem ein Verfahren zum Betreiben einer Brennkraftmaschine.

Bei einer Brennkraftmaschine, die als Kolbenmotor ausgestaltet ist, kann in Betriebsphasen, in denen nur ein Teil der von der Brennkraftmaschine bereitstellbaren Leistung benötigt wird, zur Reduzierung des Kraftstoffverbrauchs eine Zylinderabschaltung durchgeführt werden, bei der ausgewählte Zylinder deaktiviert werden. In den deaktivierten Zylindern laufen die Kolben passiv mit, ohne Antriebsleistung zu erzeugen. Hierzu wird zumindest die Kraftstoffzufuhr zu den deaktivierten Zylindern unterbrochen. Da die verbleibenden nicht-deaktivierten Zylinder dann mehr Leistung generieren müssen, damit die Brennkraftmaschine insgesamt die geforderte Leistung abgeben kann, muss die Frischluftzufuhr zu den aktiven Zylindern entsprechend erhöht, also entdrosselt werden. Somit können durch die Zylinderabschaltung die Ladungswechselverluste gegenüber einem konventionell gedrosselten Betrieb reduziert werden, was zu einer Reduzierung des Kraftstoffverbrauchs führt.

Aus der DE 696 00 937 T2 ist eine Brennkraftmaschine bekannt, die für jeden Zylinder Einlassventile und Auslassventile aufweist. Ferner ist eine Nockenwelle zur Betätigung wenigstens der Auslassventile vorgesehen. Außerdem sind mehrere Einlassdrosseln vorgesehen, die bei einigen Zylindern stromauf der Einlassventile angeordnet sind. Mit Hilfe eines Phasensteuermechanismus können die Steuerzeiten der Nockenwelle in Bezug auf die Drehstellung der Kurbelwelle der Brennkraftmaschine eingestellt werden. Außerdem weist die bekannte Brennkraftmaschine eine Steuerung auf, mit der die Einlassdrosseln und der Phasensteuermechanismus betätigbar sind. Die Steuerung ist so ausgestattet, dass sie zur Realisierung einer Zylinderabschaltung die Einlassdrosseln schließt und den Phasensteuermechanismus so betätigt, dass ein Öffnungszeitfenster der Auslassventile im Vergleich zu einem Betrieb ohne Zylinderabschaltung um bis zu 100° Kurbelwellenwinkel nach spät verschoben wird. Auf diese Weise kann eine Druckdifferenz zwischen Brennraum und Auslasstrakt beim Öffnen des Auslassventils des jeweiligen deaktivierten Zylinders gegenüber der konventionellen Steuerzeit reduziert werden. In der Folge können Strömungsverluste aufgrund einer Rückströmung von Abgas verringert werden. Die Verschiebung des Öffnungszeitfensters der Auslassventile bei den deaktivierten Zylindern vergrößert den Ventilüberschnitt mit dem Öffnungszeitfenster der zugehörigen Einlassventile. Hierdurch kann ein Druckausgleich zwischen einem zwischen der jeweiligen Einlassdrossel und dem zugehörigen Einlassventil angeordneten Totvolumen und dem Auslasstrakt erfolgen, wodurch die Ladungswechselverluste weiter verringert werden können.

Bei der bekannten Brennkraftmaschine müssen den Auslassventilen der Zylinder zumindest zwei separate Nockenwellen zugeordnet werden, um nur die einer der Nockenwelle zugeordneten Zylinder deaktivieren zu können. Beispielsweise werden bei einem Reihen-6-Zylinder-Motor die ersten drei aufeinander folgenden Zylinder mit einer ersten Nockenwelle auslassseitig gesteuert, während die zweiten drei aufeinander folgenden Zylinder mit einer zweiten Nockenwelle auslassseitig gesteuert werden. Die für die Zylinderabschaltung benötigten Einlassdrosseln sind dann z. Bsp. den ersten drei Zylindern zugeordnet. Zum Deaktivieren der ersten drei Zylinder wird dann die erste Nockenwelle mit besagtem Phasensteller betätigt. Ebenso ist die bekannte Zylinderabschaltung auch bei einem V-6-Zylinder-Motor realisierbar, bei dem zwei Zylinderbänke mit jeweils drei Zylindern vorgesehen sind. Die Zylinderabschaltung ist dann für alle Zylinder einer Zylinderbank durchführbar.

Da die bekannte Brennkraftmaschine eine separate Nockenwelle mit Phasensteller für die deaktivierbaren Zylinder benötigt, ist der Aufwand zur Realisierung einer derartigen Zylinderabschaltung vergleichsweise groß. Ferner eignet sie sich nur für eine begrenzte Anzahl unterschiedlicher Motor-Typen. Beispielsweise eignet sie sich nicht bei einem Reihen-4-Zylinder-Motor. Dieser Motortyp ist jedoch global gesehen der am weitesten verbreitete.

Die vorliegende Erfindung beschäftigt sich mit dem Problem, für eine Brennkraftmaschine der eingangs genannten Art bzw. für ein zugehöriges Betriebsverfahren eine verbesserte Ausführungsform anzugeben, die sich insbesondere dadurch auszeichnet, dass sie vergleichsweise preiswert realisierbar ist. Außerdem soll sie eine vergleichsweise hohe Flexibilität hinsichtlich ihrer Anwendbarkeit für unterschiedliche Motor-Typen aufweisen. Ferner ist eine Lösung erwünscht, mit der es vergleichsweise einfach ist, konventionelle Brennkraftmaschinen zur Realisierung einer Zylinderabschaltung umzurüsten.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, zum Betätigen der Auslassventile eine Doppelnockenwelle zu verwenden, die zwei koaxial zueinander bzw. ineinander angeordnete Wellen aufweist, die mit Hilfe einer entsprechenden Phasenstelleinrichtung relativ zueinander drehverstellbar sind. Die eine Welle trägt Nocken zum Betätigen der den deaktivierbaren Zylindern zugeordneten Auslassventile, während die andere Welle Nocken zum Betätigen der Auslassventile der nicht-deaktivierbaren Zylinder trägt. Durch diese Bauweise ist es insbesondere möglich, bei einem Reihen-4-Zylinder-Motor die beiden inneren oder die beiden äußeren Zylinder deaktivierbar auszugestalten. Ferner benötigt eine derartige Doppelnockenwelle, die auch unter der Bezeichnung Cam-in-Cam-Nockenwelle bekannt ist, im Wesentlichen den gleichen Einbauraum wie eine herkömmliche Nockenwelle, so dass sie anstelle einer herkömmlichen Nockenwelle verbaut werden kann. Hierdurch ist es besonders einfach, eine herkömmliche Brennkraftmaschine durch Ersetzen einer herkömmlichen Einfachnockenwelle durch eine Doppelnockenwelle mit Phasensteller so umzurüsten, dass eine Zylinderabschaltung ermöglicht wird. Es ist klar, dass hierzu außerdem noch eine Möglichkeit bereitgestellt werden muss, die Frischluftzufuhr zu den deaktivierbaren Zylindern zu unterbrechen, bspw. mittels wenigstens einer Drosselklappe. Die hier vorgestellte Bauweise repräsentiert eine so genannte Add-On-Lösung, die mit einem vergleichsweise geringen Aufwand bei einer herkömmlichen Brennkraftmaschine realisiert werden kann. Ferner kann mit vergleichsweise geringem Aufwand auch bei Motor-Typen eine Zylinderabschaltung realisiert werden, die bei herkömmlicher Vorgehensweise mit zwei separaten auslassseitigen Nockenwellen nicht oder nur mit sehr viel höheren Kosten realisierbar ist.

Zur Realisierung der Unterbrechung der Frischluftzuführung zu den deaktivierten bzw. deaktivierbaren Zylindern kommen unterschiedliche Maßnahmen in Betracht. Diese können alternativ zur Anwendung kommen. Soweit sinnvoll, können sie auch kumulativ angewandt werden. Beispielsweise kann in Frischluftpfaden, die dem jeweiligen deaktivierbaren Zylinder Frischluft zuführen, jeweils ein Auf-Zu-Steller angeordnet sein. Dieser ist dann stromauf des jeweiligen Einlassventils angeordnet und zusätzlich dazu vorgesehen. Ein derartiger Auf-Zu-Steller charakterisiert sich dadurch, dass er in einer hinreichend kurzen Stellzeit zwischen einer Auf-Stellung, in welcher er den Frischluftpfad öffnet, und einer Zu-Stellung verstellbar ist, in der er den Frischluftpfad sperrt. Ein derartiger Auf-Zu-Steller baut vergleichsweise einfach und preiswert. Anstelle eines derartigen Auf-Zu-Stellers kann auch ein Zusatzventil verwendet werden, dass sich durch extrem kurze Schaltzeiten auszeichnet und wenigstens zwei Schaltstellungen besitzt, um ein Sperren und Freigeben des Frischluftpfads realisieren zu können. Ein derartiges Zusatzventil kann weitere Ventilstellungen aufweisen und/oder kann sich durch extrem kurze Schaltzeiten auszeichnen. Hierdurch ist es möglich, das besagte Zusatzventil auch für andere Funktionen zu verwenden, die bspw. strömungsdynamische Effekte ausnutzen. Anstelle derartiger zusätzlicher Ventile bzw. Steller ist es grundsätzlich ebenso möglich, den Einlassventilen der deaktivierbaren Zylinder einen variablen Ventiltrieb zuzuordnen, der so ausgestaltet ist, dass die den deaktivierbaren Zylindern zugeordneten Einlassventile zum Deaktivieren des jeweiligen Zylinders in ihrer Schließstellung verbleiben können. Ein derartiger variabler Ventiltrieb kann bspw. mittels elektromagnetischer Steller oder ebenfalls mit einer Doppelnockenwelle (bspw. VLD-System) realisiert werden. Des Weiteren kommen Systeme zur diskreten Hub-Umschaltung und/oder Hub-Abschaltung in Betracht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 bis 4: jeweils eine stark vereinfachte, schaltplanartige Prinzipdarstellung einer Brennkraftmaschine bei unterschiedlichen Ausführungsformen,
- Fig. 5: ein Diagramm zur Veranschaulichung von Öffnungszeiten von Ladungswechselventilen bei aktivierten Zylindern,
- Fig. 6: ein Diagramm wie in Fig. 7, jedoch bei deaktivierten Zylindern,
- Fig. 7 und 8: Diagramme zur Veranschaulichung einer Hysterese einer Strategie zum Aktivieren und Deaktivieren von Zylindern.

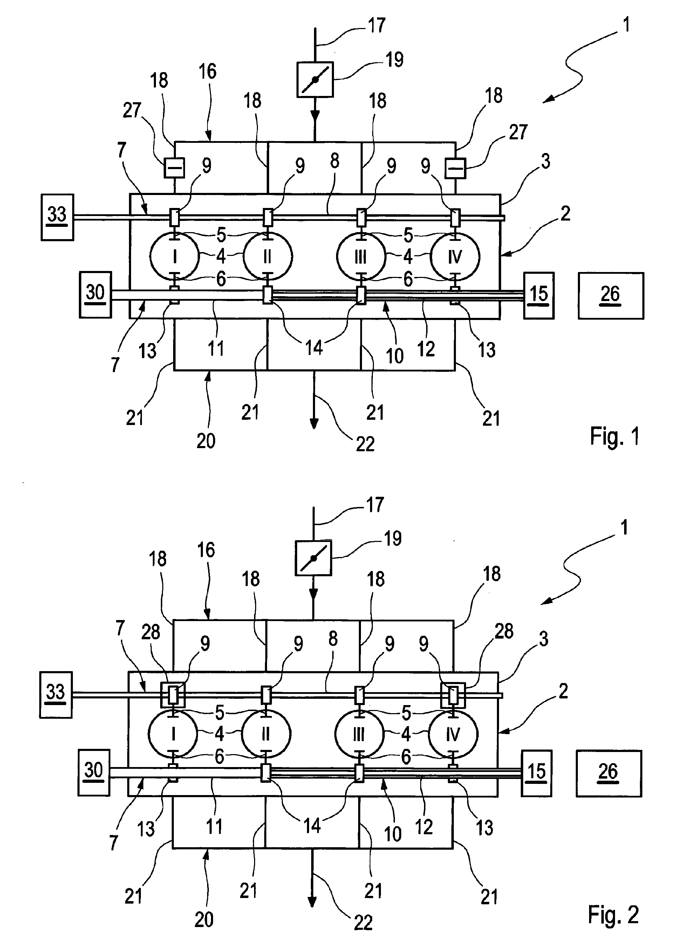

Entsprechend den Fig. 1 bis 4 umfasst eine Brennkraftmaschine 1, die insbesondere in einem Kraftfahrzeug angeordnet sein kann, einen Motorblock 2 mit wenigstens einer Zylinderbank 3, in der mehrere Zylinder 4 angeordnet sind. Im Beispiel ist ohne Beschränkung der Allgemeinheit ein 4-Zylinder-Reihenmotor dargestellt. Die einzelnen Zylinder 4 sind mit I bis IV durchnummeriert. Es ist klar, dass die Brennkraftmaschine 1 auch mehr als vier Zylinder 4 aufweisen kann. Insbesondere kann sie als 6-Zylinder-Motor oder als 8-Zylinder-Motor ausgestaltet sein. Ebenso können auch mehr als acht Zylinder 4 vorgesehen sein. Desweiteren kann die Brennkraftmaschine 1 auch als V-Motor oder als Boxermotor oder als W-Motor ausgestaltet sein. Der Motorblock 2 besitzt dann eine entsprechende Anzahl an Zylinderbänken 3. Die nachfolgenden Ausführungen zum gezeigten 4-Zylinder-Reihenmotor sind analog auf alle anderen Kolbenmotoren anwendbar, die sich für eine Zylinderabschaltung eignen.

Typischerweise ist die Zündfolge bei einem 4-Zylinder-Reihenmotor entweder 1-III-IV-II oder I-II-IV-III. Aus Gründen der Laufruhe eignen sich bei einer derartigen Zündfolge nur die beiden äußeren Zylinder 4_{I} und 4_{IV} oder die beiden inneren Zylinder 4_{II} und 4_{III} für eine Zylinderabschaltung. In den hier gezeigten Ausführungsformen sind jeweils die beiden äußeren Zylinder 4_{I} und 4_{IV} deaktivierbar, während die beiden inneren Zylinder 4_{II} und 4_{III} nicht deaktivierbar sind. In diesen Zylindern 4 ist in üblicher Weise jeweils ein hier nicht gezeigter Kolben hubverstellbar angeordnet.

Den Zylindern 4 sind in üblicher Weise Einlassventile 5 und Auslassventile 6 zugeordnet. Es ist klar, dass je Zylinder 4 mehrere Einlassventile 5 und/oder mehrere Auslassventile 6 zugeordnet sein können. Mit Hilfe der Einlassventile 5 und der Auslassventile 6 können Ladungswechselvorgänge der Zylinder 4 in üblicher Weise gesteuert werden. Zum Betätigen der Ladungswechselventile 5, 6 ist die Brennkraftmaschine 1 mit einem Ventiltrieb 7 ausgestattet. Zum Betätigen der Einlassventile 5 umfasst der Ventiltrieb 7 eine Einlassnockenwelle 8, die hier als Einfachnockenwelle ausgestaltet ist und dementsprechend Nocken 9 oder Einlassnocken 9 zum Betätigen der Einlassventile 5 sowohl der deaktivierbaren als auch der nicht-deaktivierbaren Zylinder 4 aufweist. Die Einlassnockenwelle 8 kann mit einer (ersten) Einrichtung 33 zur Phasenverstellung (erster Phasensteller 33) ausgestattet sein, welche eine Verstellung der Lage des Einlassventilhubes innerhalb eines Motorzyklus' ermöglicht.

Ferner weist der Ventiltrieb 7 eine Auslassnockenwelle 10 auf, die als Doppelnockenwelle konzipiert ist. Diese Doppelnockenwelle 10 weist eine äußere, als Hohlwelle konzipierte äußere oder erste Welle 11 oder Außenwelle 11 sowie eine innere oder zweite Welle 12 oder Innenwelle 12 auf. Die Innenwelle 12 kann ebenfalls als Hohlwelle konzipiert sein. Ebenso kann es sich bei der Innenwelle 12 um eine Vollwelle handeln. Die beiden Wellen 11, 12 der Doppelnockenwelle 10 sind zueinander bzw. ineinander koaxial angeordnet. Sie sind relativ zueinander drehverstellbar. Die erste Welle 11 oder Außenwelle 11 weist Nocken 13 oder Auslassnocken 13 zum Betätigen der Auslassventile 6 der deaktivierbaren Zylinder 4_{I} und 4_{IV} auf. Im Unterschied dazu weist die zweite Welle 12 bzw. Innenwelle 12 Nocken 14 oder Auslassnocken 14 zum Betätigen der Auslassventile 6 der nicht-deaktivierbaren Zylinder 4_{II} und 4_{III} auf. Mit Hilfe einer Stelleinrichtung 15, die auch als Phasenstelleinrichtung 15 oder Phasensteller 15 bezeichnet werden kann, kann die relative Drehlage zwischen den beiden Wellen 11, 12 verstellt werden. Dieser zum Verändern der relativen Drehlage zwischen den Wellen 11, 12 vorgesehene Phasensteller 15 kann im Folgenden auch als Eventsteller 15 bezeichnet werden.

Die Auslassnockenwelle 10 kann mit einer (zweiten) Einrichtung 30 zur Phasenverstellung (zweiter Phasensteller 30) ausgestattet sein, welche eine Verstellung der Lage des Auslassventilhubes innerhalb eines Motorzyklus' ermöglicht. Diese Phasenvertellung des Auslasswellenpaketes kann unabhängig von einer Relativverdrehung der Einzelwellen des Auslasswellenpaketes erfolgen.

Speziell die Kombination von Direkteinspritzung, Abgasturboaufladung in Verbindung mit Ventiltriebsvariabilitäten (zunächst ohne Relativverdrehung der Nocken auf der Auslassseite) wird nach derzeitigem Stand der Technik als zielführend für die Weiterentwicklung ottomotorischer Konzepte gesehen. Speziell eine große Ventilüberschneidung im Bereich des oberen Totpunktes des Ladungswechsels (späte Lage der Auslassventile, frühe Lage der Einlassventile) ermöglicht eine effektive Spülstrategie (Scavenging).

Die Brennkraftmaschine 1 umfasst ferner eine Frischluftanlage 16, die eine gemeinsame Frischluftleitung 17 aufweist, die in mehrere Einzelleitungen 18 übergeht, die jeweils einem der Zylinder 4 zugeordnet sind. Üblicherweise enthält die gemeinsame Frischluftleitung 17 gemäß den Fig. 1 bis 3 eine Drosselklappe 19 zum Drosseln der Frischluftzufuhr bei Teillastbetrieb. Ferner weist die Brennkraftmaschine 1 eine Abgasanlage 20 auf, die mehrere einzelne Abgasleitungen 21 umfasst. Die einzelnen Abgasleitungen 21 sind jeweils einem der Zylinder 4 zugeordnet und münden in eine gemeinsame Abgasleitung 22 ein, die das Abgas in üblicher Weise abführt.

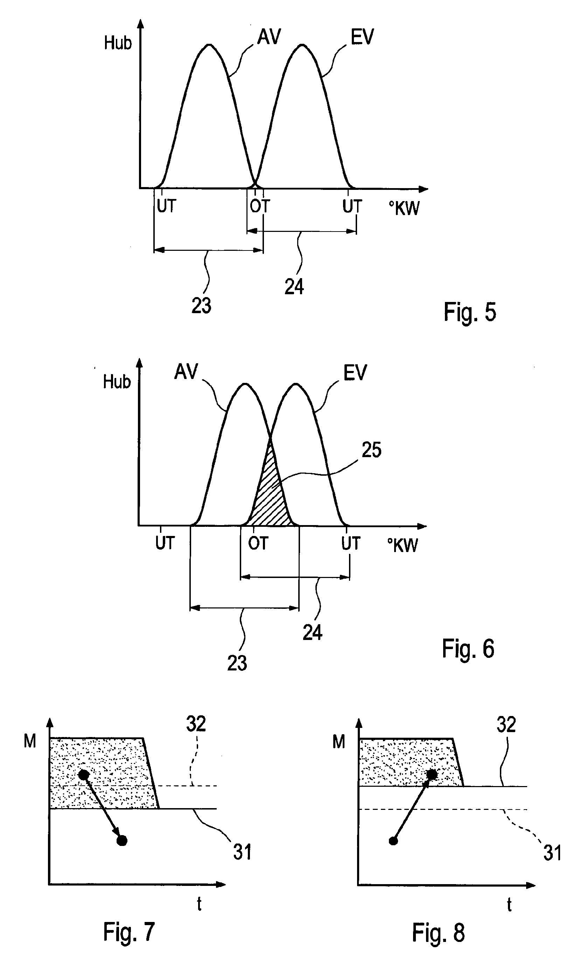

Den hier gezeigten Ausführungsformen der Fig. 1 bis 4 ist gemeinsam, dass die auslassseitige Nockenwelle 10 als Doppelnockenwelle 10 ausgestaltet ist und eine den deaktivierbaren Zylindern 4 zugeordnete erste Welle 11 und eine den nicht deaktivierbaren Zylindern 4 zugeordnete zweite Welle 12 aufweist. Mit Hilfe des Stellantriebs 15 kann zur Realisierung einer Zylinderabschaltung, also zum Deaktivieren der deaktivierbaren Zylinder 4_{I} und 4_{IV} die Drehlage zwischen den beiden Wellen 11, 12 der Doppelnockenwelle 10 so verändert werden, dass ein in den Fig. 5 und 6 gezeigtes Öffnungszeitfenster 23 der Auslassventile 6 der deaktivierbaren Zylinder 4_{I} und 4_{II} relativ zu einem Öffnungszeitfenster der Auslassventile 6 der nicht deaktivierten Zylinder 4_{II} und 4_{III} nach spät verstellt wird. Hierdurch kommt es zu einer Ventilüberschneidung mit einem in den Fig. 5 und 6 wiedergegebenen Öffnungszeitfenster 24 der Einlassventile 5 der deaktivierten Zylinder 4_{I} und 4_{IV} Besagte Ventilüberschneidung ist in Fig. 6 durch eine schraffierte Schnittfläche 25 verdeutlicht, die sich zwischen einer Hubkurve AV eines Auslassventils 6 und einer Hubkurve EV eines Einlassventils 5 ausbildet.

Zur Realisierung der Zylinderabschaltung ist die Brennkraftmaschine 1 außerdem mit einer Steuerung bzw. mit einem Motorsteuergerät 26 ausgestattet, mit dessen Hilfe zumindest die Stelleinrichtung 15 und eine hier nicht gezeigte Kraftstoffversorgungseinrichtung, insbesondere eine Einspritzanlage, betätigt werden kann. Zum Realisieren der Zylinderabschaltung bewirkt die Steuerung 26 bzw. bewirkt das Steuergerät 26 zum einen eine Unterbrechung der Kraftstoffzufuhr zu den deaktivierbaren Zylindern 4_{I} und 4_{IV}. Zum anderen bewirkt sie die Phasenverstellung für die Betätigung der Auslassventile 6 der deaktivierbaren Zylinder 4_{I} und 4_{IV}. Hierzu verdreht sie die Außenwelle 11 relativ zur Innenwelle 12 nach spät, während die Korrelation zwischen der Innenwelle 12 und einer hier nicht gezeigten Kurbelwelle der Brennkraftmaschine 1 und/oder zur Einlassnockenwelle 8 gleich bleibt.

Ferner ist es vorteilhaft, zur Realisierung der Zylinderabschaltung die Frischluftzufuhr zu den deaktivierten bzw. deaktivierbaren Zylindern 4_{I} und 4_{IV} zu unterbrechen, was ebenfalls durch die Steuerung 26 bzw. das Steuergerät 26 veranlasst wird. Zum Unterbrechen der Frischluftzufuhr zu den deaktivierbaren Zylindern 4_{I} und 4_{IV} sind unterschiedliche Maßnahmen vorstellbar. Im Folgenden werden anhand der Fig. 1 bis 4 exemplarisch mehrere unterschiedliche Ausführungsformen der Frischluftabschaltung näher erläutert.

Fig. 1 zeigt eine Ausführungsform, bei der in den einzelnen Frischluftleitungen 18, die zu den deaktivierbaren Zylindern 4_{I} und 4_{IV} führen, jeweils ein Auf-Zu-Steller 27 angeordnet ist. Die beiden Auf-Zu-Steller 27 sind mit Hilfe des Steuergeräts 26 betätigbar und sind zwischen einer Auf-Stellung und einer Zu-Stellung verstellbar. In der Auf-Stellung ist die zugehörige Frischluftleitung 18, also der zum jeweiligen Zylinder 4 führende Frischluftpfad geöffnet. In der Zu-Stellung ist die jeweilige Frischluftleitung 18 bzw. der zum jeweiligen Zylinder 4 führende Frischluftpfad gesperrt. Die Auf-Zu-Steller 27 sind zusätzlich zu den Einlassventilen 5 vorhanden und sind stromauf davon angeordnet.

Bei der Ausführungsform gemäß Fig. 2 ist der Ventiltrieb 7 so ausgestaltet, dass er die Einlassventile 5 der deaktivierbaren Zylinder 4_{I} und 4_{IV} für die Dauer der Zylinderabschaltung so ansteuern kann, dass diese in ihrer Schließstellung verbleiben. Auch hierdurch kann die Frischluftzufuhr zu den deaktivierten Zylindern 4 unterbrochen werden. Der Ventiltrieb 7 kann hierzu mit Einrichtungen 28 ausgestattet sein, die den Einlassventilen 5 der deaktivierbaren Zylindern 4 zugeordnet sind. Derartige Einrichtungen 28 sind in Fig. 2 durch Rahmen symbolisch angedeutet und können bspw. unterschiedliche bekannte Technologien, wie z. Bsp. verstellbare Tassenstössel, eine Hubumschaltung und/oder Hubabschaltung sowie einen variablen Ventiltrieb beinhalten können.

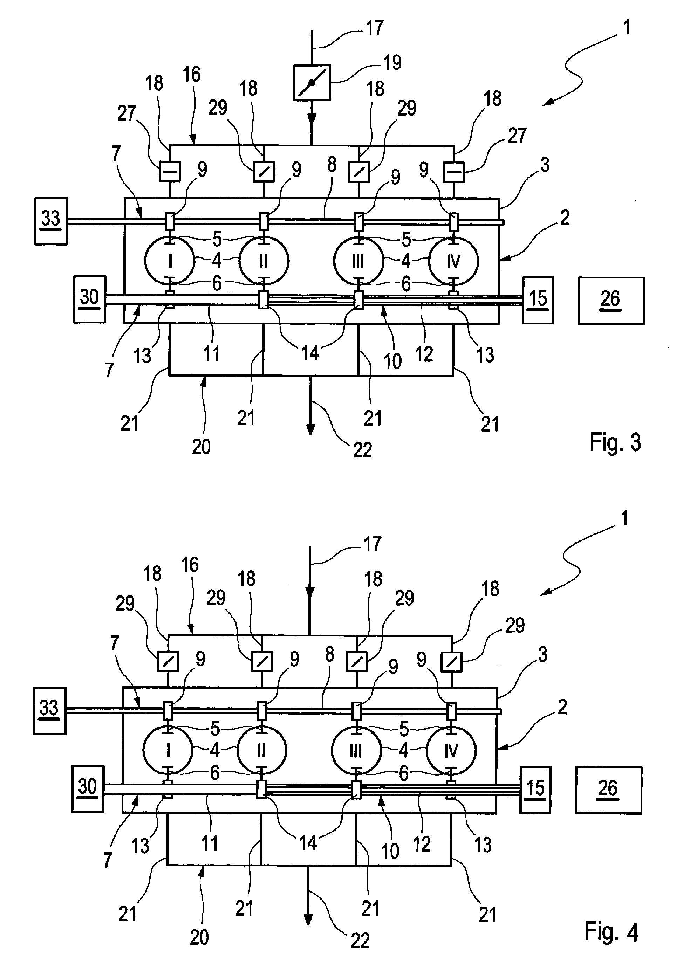

Die in Fig. 3 gezeigte Ausführungsform unterscheidet sich von der in Fig. 1 gezeigten Ausführungsform lediglich dadurch, dass den nicht-deaktivierbaren Zylindern 4_{II} und 4_{III} Zusatzventile 29 zugeordnet sind. Diese Zusatzventile 29 sind dabei zusätzlich zu den Einlassventilen 5 der nicht abschaltbaren Zylinder 4 vorgesehen und stromauf davon angeordnet. Im Beispiel sind die Zusatzventile 29 in der jeweiligen Frischluftleitung 18 angeordnet. Die Zusatzventile 29 sind als schnell schaltende Ventile ausgestattet, deren Schaltzeiten im zweistelligen oder einstelligen Millisekundenbereich liegen. (Zum Vergleich, die Schaltzeiten eines solchen Zusatzventils 29 können bei ca. 3 ms liegen. Bei 1000U/min und 280°KW Öffnungsdauer z.B. eines Einlassventils (von 0mm bis 0mm Hub) liegt die Öffnungsdauer des Einlassventils bei ca. 47 ms). Hierdurch lassen sich mit Hilfe der Zusatzventile 29 strömungsdynamische Effekte ausnutzen. Diese Zusatzventile 29 unterscheiden sich von den zuvor genannten Auf-Zu-Stellern 27 unter anderem durch erheblich kürzere Schaltzeiten. Zur Realisierung dieser kurzen Schaltzeiten ist ihr Aufbau deutlich komplexer und aufwendiger. Beispielsweise kann für den Betrieb mit Zylinderabschaltung eine zusätzliche Entdrosselung der Frischluftzuführung zu den nicht-deaktivierten Zylindern 4 realisiert werden. Die bei aktiver Zylinderabschaltung verbleibenden arbeitenden bzw. aktiven Zylinder 4 müssen mehr Leistung erbringen, um die an den deaktivierten Zylindern 4 fehlende Leistung ausgleichen zu können. Die Zylinderabschaltung führt u.a. über eine Lastpunktverschiebung der noch in Betrieb befindlichen Zylinder zu einem geringeren Verbrauch. Für den Fall eines stöchiometrischen Motorbetriebes führt dies sogar zu einem geringeren Frischluftbedarf, weswegen die Drosselklappe sogar weiter geschlossen werden muss. Durch eine spezielle Ansteuerung der Zusatzventile 29 kann die Drossel 19 weiter oder sogar voll geöffnet werden, da die Zusatzventile 29 zum Zumessen der erforderlichen Frischluftmenge betätigt werden. Insbesondere kann mit Hilfe der Zusatzventile 29 durch Ausbilden eines Unterdrucks zwischen dem jeweiligen Zusatzventil 29 und dem Brennraum ein Druckstoß bzw. eine impulsartige Befüllung des Brennraums realisiert werden, die bei hohen Strömungsgeschwindigkeiten und reduzierten Drosselverlusten realisierbar ist.

Die in Fig. 1 gezeigte Ausführungsform ermöglicht ebenfalls eine Entdrosselung der aktiven Zylinder 4 bei aktivierter Zylinderabschaltung, unterscheidet sich jedoch von der in Fig. 3 gezeigten Ausführungsform dadurch, dass die Steuerzeiten der Einlassventile 5 durch eine Phasenverstellung der Einlassnockenwelle 8 entsprechend adaptiert werden. Hierzu ist wieder der entsprechende erste Phasensteller 33 vorgesehen. Da die Einlassnockenwelle 8 als Einfachnockenwelle 8 ausgestaltet ist, bewirkt der erste Phasensteller 33 bei seiner Betätigung eine Verschiebung der Öffnungszeitfenster der Einlassventile 5 bei allen Zylindern 4. Bei den aktiven Zylindern 4_{II} und 4_{III} wird dadurch die gewünschte Entdrosselung realisiert. Um die weiter oben angesprochene Ventilüberschneidung 25 bei den Ladungswechselventilen 5, 6 der deaktivierten Zylinder 4 dennoch realisieren zu können, muss die zur Entdrosselung der aktiven Zylinder 4_{II} und 4_{III} durchgeführte Verschiebung der Öffnungszeitfenster der Einlassventile 5 beim Verschieben der Öffnungszeitfenster der Auslassventile 6 der deaktivierten Zylinder 4_{I} und 4_{IV} beim Betätigen des Stellers 15 entsprechend berücksichtigt werden.

Die in Fig. 4 gezeigte Ausführungsform verwendet zum Unterbrechen der Luftzuführung zu den deaktivierten Zylindern 4_{I} und 4_{IV} Zusatzventile 29, wie sie mit Bezug auf Fig. 3 bereits erwähnt worden sind. Wie bei der in Fig. 3 gezeigten Ausführungsform sind bei der in Fig. 4 gezeigten Ausführungsform außerdem die permanent aktiven Zylinder 4_{II} und 4_{III} mit derartigen Zusatzventilen 29 versehen. Dementsprechend ist jedem Zylinder 4 hier ein derartiges Zusatzventil 29 zugeordnet, das zusätzlich zu den Einlassventilen 5 vorhanden ist und das jeweils stromauf des jeweiligen Einlassventils 5 im jeweiligen Frischluftpfad angeordnet ist. Im Beispiel sind die Zusatzventile 29 jeweils in der einzelnen Frischluftleitung 18 angeordnet. Mit Hilfe der Zusatzventile 29, die wieder schnellschaltend ausgestaltet sind, kann auch für den Normalbetrieb ohne Zylinderabschaltung eine Entdrosselung für alle Zylinder 4 realisiert werden, so dass letztlich auf die in den Fig. 1 bis 3 gezeigte Drossel 19 verzichtet werden kann. Insoweit ist die Frischluftanlage 16 bei der in Fig. 4 gezeigten Ausführungsform entdrosselt bzw. drosselfrei. Die Frischluftzumessung erfolgt über die Öffnungszeiten der Zusatzventile 29. Durch Öffnen der Zusatzventile 29 zeitlich nach dem Öffnen der Einlassventile 5 können die Brennräume der Zylinder 4 impulsartig beladen werden, wodurch sich eine ungedrosselte Zuströmung mit entsprechend wenig Verlusten realisieren lässt. Insbesondere kann mit derartigen Zusatzventilen 29 ein so genanntes Miller-Verfahren (Frühes-Einlass-Schließt, FES) realisiert werden.

Bei aktiver Zylinderabschaltung sind die den deaktivierten Zylindern 4_{I} und 4_{IV} zugeordneten Zusatzventile 29 permanent in deren Schließstellung verstellt, während die den aktiven Zylindern 4_{II} und 4_{III} zugeordneten Zusatzventile 29 weiterhin zum Zumessen der Frischluft betätigt werden.

Bei der in Fig. 4 gezeigten Ausführungsform kann analog zu der in Fig. 1 gezeigten Ausführungsform wieder ein erster Steller 33 zum Verändern der Phasenlage der Einlassnockenwelle 8 vorgesehen sein. Hierdurch ergeben sich zusätzliche Freiheitsgrade zum Variieren der Einlasssteuerzeiten. Insbesondere kann dadurch nochmals eine Verbesserung der Entdrosselung realisiert werden. Anstelle eines derartigen Phasenstellers 33 kann auch ein variabler Ventiltrieb oder eine Hubumschaltung einlassseitig realisiert werden.

Fig. 5 zeigt einen Auslassventilhubverlauf AV und einen Einlassventilhubverlauf EV bei einem aktiven Zylinder 4. Erkennbar ist das Öffnungszeitfenster 23 des Auslassventils 6 etwa symmetrisch zu einem Kolbenhub angeordnet, der sich von einem unteren Totpunkt UT zu einem oberen Totpunkt OT erstreckt. Analog dazu ist das Öffnungszeitfenster 24 des jeweiligen Einlassventils 5 etwa symmetrisch zu einem Kolbenhub angeordnet, der sich vom oberen Totpunkt OT zum unteren Totpunkt UT erstreckt. Im Bereich des oberen Totpunkts OT ergibt sich dabei eine geringfügige Ventilüberschneidung, die üblicherweise etwa 40° KW betragen kann.

Fig. 6 zeigt dagegen die Hubverläufe AV und EV bei einem deaktivierten Zylinder 4. Während der Hubverlauf EV des Einlassventils 5 unverändert geblieben ist, ist der Hubverlauf AV des Auslassventils 6 nach spät verschoben worden. Im Beispiel ist die Verschiebung so dimensioniert, dass sich das Öffnungszeitfenster 23 des Auslassventils 6 etwa symmetrisch zum oberen Totpunkt OT befindet. Dies entspricht einer Verschiebung um etwa 90° Kurbelwellenwinkel (°KW) in Richtung spät. Erkennbar entsteht dadurch eine vergleichsweise große Überschneidung 25. Sie beträgt im gezeigten Beispiel etwa 90° Kurbelwellenwinkel. Grundsätzlich sind jedoch auch andere Überschneidungswerte denkbar. Zweckmäßig ist eine relative Spätverstellung der Auslassventile 6 des mindestens einen deaktivierten Zylinders 4 von mindestens 40° Kurbelwellenwinkel gegenüber den Auslassventilen 6 des mindestens einen nicht deaktivierten Zylinders. Ausgehend von einer kleinen Überlappung im Ausgangszustand gemäß Fig. 5 von z.B. 40° KW ergibt sich bei einer Spätverstellung um wenigstens 40° KW eine Überschneidung 25 von mindestens 80° KW.

Entsprechend den Fig. 7 und 8 erfolgt die Deaktivierung der deaktivierbaren Zylinder 4 in Abhängigkeit einer Lastanforderung der Brennkraftmaschine 1. Die Lastanforderung ist in den Diagrammen der Fig. 7 und 8 durch ein von der Brennkraftmaschine 1 gefordertes Motormoment M symbolisiert. Hierbei sind in der Motorsteuerung 26 zwei Lastschwellen definiert, nämlich eine untere Lastschwelle 31 und eine obere Lastschwelle 32. Die obere Lastschwelle 32 liegt oberhalb der unteren Lastschwelle 31. In Fig. 7 befindet sich die Brennkraftmaschine 1 in einem Betriebszustand ohne Zylinderabschaltung. Sinkt nun die Lastanforderung der Brennkraftmaschine 1 unter die untere Lastschwelle 31 erfolgt ein Umschalten auf einen Betriebszustand mit Zylinderabschaltung. Bemerkenswert ist hierbei, dass ein Absinken der Lastanforderung unter die obere Lastschwelle 32 zum Umschalten auf den Betriebszustand mit Zylinderabschaltung nicht ausreicht.

Fig. 8 zeigt nun eine Situation, bei welcher sich die Brennkraftmaschine 1 in einem Betriebszustand mit Zylinderabschaltung befindet. Steigt die Lastanforderung der Brennkraftmaschine 1 nun über die obere Lastschwelle 32 an, wird die Zylinderabschaltung deaktiviert, dass heißt, die Brennkraftmaschine 1 wird wieder in den Betriebszustand ohne Zylinderabschaltung zurückgeführt. Bemerkenswert ist hier, dass ein Ansteigen der Lastanforderung über die untere Lastschwelle 31 nicht dazu ausreicht, die deaktivierten Zylinder 4 wieder zu aktivieren. Durch die beiden voneinander beabstandeten Lastschwellen 31, 32 kann eine Hysteresefunktion für die Betriebsstrategie der Brennkraftmaschine 1 realisiert werden. Hierdurch kann ein permanentes Aktivieren und Deaktivieren der Zylinderabschaltung vermieden werden, wenn die aktuelle Lastanforderung der Brennkraftmaschine 1 in einem zwischen den Lastschwellen 31, 32 liegenden Bereich variiert.

## Patentansprüche

1. Brennkraftmaschine, insbesondere für ein Kraftfahrzeug,
- mit mehreren Zylindern (4), von denen zumindest einer deaktivierbar ist, während zumindest ein anderer nicht deaktivierbar ist,
- mit Einlassventilen (5) und Auslassventilen (6) zum Steuern von Ladungswechselvorgängen der Zylinder (4),
- mit einem Ventiltrieb (7) zum Betätigen der Einlassventile (5) und Auslassventile (6),
**dadurch gekennzeichnet,**
- **dass** der Ventiltrieb (7) zum Betätigen der Auslassventile (6) zumindest eine Doppelnockenwelle (10) aufweist, die zwei koaxial ineinander angeordnete Wellen (11, 12) aufweist, nämlich eine als Hohlwelle konzipierte äußere Welle (11) und eine innere Welle (12),
- **dass** die eine Welle (11) zumindest einen Nocken (13) zum Betätigen des Auslassventils (6) oder der Auslassventile (6) des wenigstens einen deaktivierbaren Zylinders (4) aufweist,
- **dass** die andere Welle (12) zumindest einen Nocken (14) zum Betätigen des Auslassventils (6) oder der Auslassventile (6) des wenigstens einen nicht-deaktivierbaren Zylinders (4) aufweist.

2. Brennkraftmaschine nach Anspruch 1,
**dadurch gekennzeichnet,**
**dass** die Doppeinockenwelle (10) so ausgelegt ist, dass durch Drehverstellen der Wellen (11, 12) zueinander ein Öffnungszeitfenster (23) des Auslassventils (6) oder der Auslassventile (6) des wenigstens einen deaktivierbaren Zylinders (4) relativ zu einem Öffnungszeitfensters des Auslassventils (6) oder der Auslassventile (6) des wenigstens einen nicht-deaktivierten Zylinders (4) nach spät verstellbar ist.

3. Brennkraftmaschine nach Anspruch 2,
**dadurch gekennzeichnet,**
**dass** das Öffnungszeitfenster (23) des Auslassventils (6) oder der Auslassventile (6) des wenigstens einen deaktivierbaren Zylinders (4) soweit nach spät verstellbar ist, dass sich eine Überschneidung (25) von mindestens 80° Kurbelwellenwinkel mit einem Öffnungszeitfenster (24) des Einlassventils (5) oder der Einlassventile (5) des wenigstens einen deaktivierbaren Zylinders (4) einstellt.

4. Brennkraftmaschine nach einem der Ansprüche 1 bis 3,
**dadurch gekennzeichnet,**
**dass** ein Motorsteuergerät (26) vorgesehen ist, das so ausgestaltet und/oder programmiert ist, dass es zum Deaktivieren des wenigstens einen deaktivierbaren Zylinders (4) eine Unterbrechung einer Frischluftzuführung zum wenigstens einen deaktivierbaren Zylinder (4) bewirkt und eine Stelleinrichtung (15) zum Verstellen der einen Welle (11) relativ zur anderen Welle (12) ansteuert, um ein Öffnungszeitfenster (23) des Auslassventils (6) oder der Auslassventile (6) des wenigstens einen deaktivierbaren Zylinders (4) nach spät zu verstellen.

5. Brennkraftmaschine nach Anspruch 4,
**dadurch gekennzeichnet,**
**dass** das Motorsteuergerät (26) zum Deaktivieren des wenigstens einen deaktivierbaren Zylinders (4) eine Unterbrechung einer Kraftstoffzuführung zum wenigstens einen deaktivierbaren Zylinder (4) bewirkt.

6. Brennkraftmaschine nach einem der Ansprüche 1 bis 5,
**dadurch gekennzeichnet,**
**dass** zum Unterbrechen einer Frischluftzuführung zum wenigstens einen deaktivierbaren Zylinder (4) in einem dem jeweiligen deaktivierbaren Zylinder (4) Frischluft zuführenden Frischluftpfad ein Auf-Zu-Steller (27) angeordnet ist.

7. Brennkraftmaschine nach einem der Ansprüche 1 bis 5,
**dadurch gekennzeichnet,**
**dass** der Ventiltrieb (7) so ausgestaltet ist, dass zum Unterbrechen einer Frischluftzuführung zum wenigstens einen deaktivierbaren Zylinder (4) das Einlassventil (5) oder die Einlassventile (5) des jeweiligen deaktivierbaren Zylinders (4) in einer Schließstellung verbleiben können.

8. Brennkraftmaschine nach einem der Ansprüche 1 bis 5,
**dadurch gekennzeichnet,**
**dass** zum Unterbrechen einer Frischluftzuführung zum wenigstens einen deaktivierbaren Zylinder (4) in einem dem jeweiligen deaktivierbaren Zylinder (4) Frischluft zuführenden Frischluftpfad ein Zusatzventil (29) angeordnet ist.

9. Brennkraftmaschine nach einem der Ansprüche 1 bis 8,
**dadurch gekennzeichnet,**
**dass** zum Entdrosseln einer Frischluftzuführung zum wenigstens einen nicht-deaktivierten Zylinder (4) in einem dem jeweiligen nicht-deaktivierbaren Zylinder (4) Frischluft zuführenden Frischluftpfad ein Zusatzventil (29) angeordnet ist.

10. Brennkraftmaschine nach einem der Ansprüche 1 bis 9,
**dadurch gekennzeichnet,**
**dass** der Ventiltrieb (7) so ausgestaltet ist, dass das Einlassventil (5) oder die Einlassventile (5) des jeweiligen nicht-deaktivierbaren Zylinders (4) zum Entdrosseln einer Frischluftzuführung zum wenigstens einen nicht-deaktivierbaren Zylinder (4) ansteuerbar ist/sind.

11. Verfahren zum Betreiben einer Brennkraftmaschine (1), insbesondere eines Kraftfahrzeugs, bei dem zum Deaktivieren wenigstens eines Zylinders (4) eine Frischluftzuführung zum jeweiligen zu deaktivierenden Zylinder (4) unterbrochen wird und ein Öffnungszeitfenster (23) des Auslassventils (6) des jeweiligen zu deaktivierenden Zylinders (4) mittels einer Doppelnockenwelle (10), die eine als Hohlwelle konzipierte äußere Welle (11) und eine koaxial darin angeordnete innere Welle (12) umfasst, relativ zum Öffnungszeitfenster des oder der anderen Zylinder (4) nach spät verstellt wird.

12. Verfahren nach Anspruch 11,
**dadurch gekennzeichnet,**
**dass** das Deaktivieren des jeweiligen deaktivierbaren Zylinders (4) in Abhängigkeit einer Lastanforderung (M) der Brennkraftmaschine (1) erfolgt.

13. Verfahren nach Anspruch 12,
**dadurch gekennzeichnet, dass** das Deaktivieren des jeweiligen deaktivierbaren Zylinders (4) erfolgt, wenn die Lastanforderung (M) unter eine untere Lastschwelle (31) absinkt, wobei das Aktivieren des jeweiligen deaktivierten Zylinders (4) erfolgt, wenn die Lastanforderung (M) über eine obere Lastschwelle (32) ansteigt, die oberhalb der unteren Lastschwelle (31) liegt.

## Claims

1. An internal combustion engine, in particular for a motor vehicle, comprising
- a plurality of cylinders (4), at least one of which can be deactivated while at least one other cylinder cannot be deactivated,
- intake valves (5) and exhaust valves (6) for controlling charge exchange processes of the cylinders (4),
- a valve train (7) for actuating the intake valves (5) and the exhaust valves (6),
**characterized in**
- **that** the valve train (7) for actuating the exhaust valves (6) has at least one double camshaft (10) which has two shafts (11, 12) arranged coaxially one inside the other, namely an outer shaft (11) configured as a hollow shaft and an inner shaft (12),
- **that** the one shaft (11) has at least one cam (13) for actuating the exhaust valve (6) or the exhaust valves (6) of the at least one deactivatable cylinder (4),
- **that** the other shaft (12) has at least one cam (14) for actuating the exhaust valve (6) or the exhaust valves (6) of the at least one non-deactivatable cylinder (4).

2. The internal combustion engine according to claim 1,
**characterized in**
**that** the double camshaft (10) is designed such that by rotationally adjusting of the shafts (11, 12) relative to one another, an opening time window (23) of the exhaust valve (6) or the exhaust valves (6) of the at least one deactivatable cylinder (4) can be retarded relative to an opening time window of the exhaust valve (6) or the exhaust valves (6) of the at least one non-deactivated cylinder (4).

3. The internal combustion engine according to claim 2,
**characterized in**
**that** the opening time window (23) of the exhaust valve (6) or the exhaust valves (6) of the at least one deactivatable cylinder (4) can be retarded to such an extent that the result is an overlap (25) of at least 80° crankshaft angle with an opening time window (24) of the intake valve (5) or the intake valves (5) of the at least one deactivatable cylinder (4).

4. The internal combustion engine according to any one of the claims 1 to 3,
**characterized in**
**that** an engine control device (26) is provided that is configured and/or programmed in such a manner that it effects an interruption of a fresh air supply to the at least one deactivatable cylinder (4) so as to deactivate the at least one deactivatable cylinder (4) and activates an adjusting device (15) for adjusting the one shaft (11) relative to the other shaft (12) in order to retard an opening time window (23) of the exhaust valve (6) or the exhaust valves (6) of the at least one deactivatable cylinder (4).

5. The internal combustion engine according to claim 4,
**characterized in**
**that** the engine control device (26) effects an interruption of a fuel supply to the at least one cylinder (4) so as to deactivate the at least one deactivatable cylinder (4).

6. The internal combustion engine according to any one of the claims 1 to 5,
**characterized in**
**that** for interrupting a fresh air supply to the at least one deactivatable cylinder (4), an open-closed actuator (27) is arranged in a fresh air path supplying fresh air to the respective deactivatable cylinder (4).

7. The internal combustion engine according to any one of the claims 1 to 5,
**characterized in**
**that** the valve train (7) is configured such that for interrupting a fresh air supply to the at least one deactivatable cylinder (4), the intake valve (5) or the intake valves (5) of the respective deactivatable cylinder (4) can remain in a closed position.

8. The internal combustion engine according to any one of the claims 1 to 5,
**characterized in that**
for interrupting a fresh air supply to the at least one deactivatable cylinder (4), an additional valve (29) is arranged in a fresh air path supplying fresh air to the respective deactivatable cylinder (4).

9. The internal combustion engine according to any one of the claims 1 to 8,
**characterized in**
**that** for dethrottling a fresh air supply to the at least one non-deactivated cylinder (4), an additional valve (29) is arranged in a fresh air path supplying fresh air to the respective non-deactivatable cylinder (4).

10. The internal combustion engine according to any one of the claims 1 to 9,
**characterized in**
**that** the valve train (7) is configured in such a manner that the intake valve (5) or the intake valves (5) of the respective non-deactivatable cylinder (4) is/are activatable so as to dethrottle a fresh air supply to the at least one non-deactivatable cylinder (4).

11. A method for operating an internal combustion engine (1), in particular of a motor vehicle, by means of which for deactivating at least one cylinder (4), a fresh air supply to the respective cylinder (4) to be deactivated is interrupted, and an opening time window (23) of the exhaust valve (6) of the respective cylinder (4) to be deactivated is retarded relative to the opening time window of the other cylinder or cylinders (4) by means of a double camshaft (10) that comprises an outer shaft (11) and an inner shaft (12) arranged coaxially therein.

12. The method according to claim 11,
**characterized in**
**that** deactivating the respective deactivatable cylinder (4) is carried out in dependence on a load requirement (M) of the internal combustion engine (1).

13. The method according to claim 12,
**characterized in**
**that** deactivating the respective deactivatable cylinder (4) is carried out if the load requirement (M) drops below a lower load threshold (31), wherein activating the respective deactivated cylinder (4) is carried out if the load requirement (M) increases above an upper load threshold (32) that lies above the lower load threshold (31).

## Revendications

1. Moteur à combustion interne, notamment pour un véhicule automobile,
- comportant plusieurs cylindres (4), parmi lesquels au moins un peut être désactivé, alors qu'au moins un autre ne peut pas être désactivé,
- comportant des soupes d'admission (5) et des soupapes d'échappement (6) pour commander les processus de changement de charge des cylindres (4),
- comportant un train de soupapes (7) pour actionner les soupapes d'admission (5) et les soupapes échappement (6),
**caractérisé en ce que**
- le train de soupapes (7) pour actionner les soupapes échappement (6) présente au moins un arbre à cames doubles (10), qui présente deux arbres (11, 12) disposés coaxialement l'un dans l'autre, à savoir un arbre extérieur conçu comme un arbre creux (11) et un arbre intérieur (12),
- un des arbres (11) présente au moins une came (13) pour actionner la soupape d'échappement (6) ou les soupapes d'échappement (6) d'au moins un cylindre désactivable (4),
- l'autre arbre (12) présente au moins une came (14) pour actionner la soupape d'échappement (6) ou les soupapes échappement (6) d'au moins un cylindre non désactivable (4).

2. Moteur à combustion interne selon la revendication 1,
**caractérisé en ce que**
l'arbre à cames doubles (10) est conçu de telle sorte que par un réglage rotatif des arbres (11, 12) l'un par rapport à l'autre une fenêtre temporelle d'ouverture (23) de la soupape d'échappement (6) ou des soupapes d'échappement (6) d'au moins un cylindre désactivable (4) peut être réglé plus tardivement par rapport à une fenêtre temporelle d'ouverture de la soupe d'échappement (6) ou soupapes d'échappement (6) d'au moins un cylindre désactivable (4).

3. Moteur à combustion interne selon la revendication 2,
**caractérisé en ce que**
la fenêtre d'ouverture temporelle (23) de la soupape d'échappement (6) ou des soupapes échappement (6) d'au moins un cylindre désactivable (4) peut être réglée ultérieurement dans la mesure où une intersection (25) d'au moins 80° de l'angle de vilebrequin avec une fenêtre temporelle d'ouverture (24) de la soupape d'admission (5) ou des soupapes d'admission (5) d'au moins un cylindre désactivable (4) s'établisse.

4. Moteur à combustion interne selon une des revendications 1 à 3,
**caractérisé en ce que**
un appareil de commande de moteur (26) est prévu, qui est conçu et/ou programmé de telle sorte qu'il provoque pour désactiver au moins un cylindre désactivable (4) une interruption d'une alimentation d'air frais d'au moins un cylindre désactivable (4) et commande un dispositif de réglage (15) pour régler un des arbres (11) par rapport à l'autre arbre (12), afin de régler plus tardivement une fenêtre temporelle d'ouverture (23) de la soupape d'échappement (6) ou des soupapes échappement (6) d'au moins un cylindre désactivable (4).

5. Moteur à combustion interne selon la revendication 4,
**caractérisé en ce que**
l'appareil de commande de moteur (26) pour désactiver au moins un cylindre désactivable (4) provoque une interruption d'une alimentation en carburant dans au moins un cylindre désactivable (4).

6. Moteur à combustion interne selon une des revendications 1 à 5,
**caractérisé en ce que**
pour interrompre une alimentation d'air frais dans au moins un cylindre désactivable (4) dans un trajet d'air frais alimentant en air frais le cylindre désactivable respectif (4), un actionneur tout ou rien (27) est disposé.

7. Moteur à combustion interne selon une des revendications 1 à 5,
**caractérisé en ce que**
le train de soupape (7) est conçu de telle sorte que pour interrompre une alimentation d'air frais dans au moins un cylindre désactivable (4) la soupape d'admission (5) ou les soupapes d'admission (5) du cylindre désactivable respectif (4) peuvent rester dans une position de fermeture.

8. Moteur à combustion interne selon une des revendications 1 à 5,
**caractérisé en ce que**
pour interrompre une alimentation d'air frais dans au moins un cylindre désactivable (4) dans un trajet d'air frais alimentant en air frais le cylindre désactivable (4) respectif, une soupape supplémentaire (29) est disposée.

9. Moteur à combustion interne selon une des revendications 1 à 8,
**caractérisé en ce que**
pour débrider une alimentation en air frais dans au moins un cylindre non désactivable (4) une soupape supplémentaire (29) est disposée dans un trajet d'air frais alimentant en air frais le cylindre non désactivable respectif (4).

10. Moteur à combustion interne selon une des revendications 1 à 9,
**caractérisé en ce que**
le train de soupapes (7) est conçu de telle sorte que la soupape d'admission (5) ou les soupapes d'admission (5) du cylindre non désactivable (4) respectif peut/peuvent être commandées pour débrider une alimentation en air frais d'au moins un cylindre non désactivable (4).

11. Procédé de fonctionnement d'un moteur à combustion interne (1), notamment d'un véhicule automobile, dans lequel pour désactiver au moins un cylindre (4) une alimentation en air frais d'un cylindre à désactiver respectif (4) est interrompue et une fenêtre temporelle d'ouverture (23) de la soupape d'échappement (6) du cylindre à désactiver respectif (4) est réglée plus tardivement au moyen d'un arbre à came double (10), qui comprend un arbre extérieur conçu comme un arbre creux (11) est un arbre intérieur disposé coaxialement dans celui-ci (12), relativement à la fenêtre temporelle d'ouverture de l'un ou l'autre cylindre (4).

12. Procédé selon la revendication 11,
**caractérisé en ce que**
la désactivation du cylindre désactivable (4) respectif se fait en fonction des exigences de charge (M) du moteur à combustion interne (1).

13. Procédé selon la revendication 12,
**caractérisé en ce que**
la désactivation du cylindre désactivable respectif (4) a lieu quand l'exigence de charge (M) baisse sous un seuil de charge inférieur (31), dans lequel l'activation du cylindre désactivable (4) respectifs a lieu quand l'exigence de charge (M) augmente au-dessus d'un seuil de charge supérieur (32), qui est situé au-dessus du seuil de charge inférieur (31).
